# EUROPÄISCHE PATENTSCHRIFT

(11) **EP 3 719 334 B1**
(45) Veröffentlichungstag und Bekanntmachung des Hinweises auf die Patenterteilung: **01.11.2023**
(21) Anmeldenummer: 20164861.5
(22) Anmeldetag: 23.03.2020
(51) Int. Cl.: F16D 3/14, F16F 15/12

(54) **KUPPLUNGSEINRICHTUNG ZUR DREHELASTISCHEN DREHMOMENTÜBERTRAGUNG**
COUPLING DEVICE FOR TORSIONALLY ELASTIC TORQUE TRANSMISSION
DISPOSITIF D'ACCOUPLEMENT DESTINÉ À LA TRANSMISSION DE COUPLE FLEXIBLE EN TORSION

(30) Priorität: 01.04.2019 DE 102019204615
(43) Veröffentlichungstag der Anmeldung: 07.10.2020
(73) Patentinhaber: Stromag GmbH, 59425 Unna (DE)
(72) Erfinder: Böhm, Peter, 59423 Unna (DE); Faust, Friedrich, 59229 Ahlen (DE); Mikolajczyk, Olaf, 59425 Unna (DE); Spink, Daniela, 59423 Unna (DE)
(74) Vertreter: Patentanwälte Ruff, Wilhelm, Beier, Dauster & Partner mbB

(56) Entgegenhaltungen:
- WO-A2-98/44277
- DE-A1- 3 425 161
- DE-A1- 3 742 794
- DE-A1- 3 805 666
- GB-A- 2 329 690
- US-A- 5 873 445

## Beschreibung

Die Erfindung betrifft eine Kupplungsvorrichtung gemäß dem Oberbegriff des Anspruchs 1.

Eine Kupplungsvorrichtung ist im Bereich der Antriebstechnik allgemein bekannt und zur drehelastischen Drehmomentübertragung in einem Antriebsstrang vorgesehen. Die bekannte Kupplungsvorrichtung weist eine radial innen liegende Kupplungsnabe und einen radial außen liegenden Kupplungsflansch auf. Der Kupplungsflansch und die Kupplungsnabe sind mittels einer Federeinrichtung in Umfangsrichtung federelastisch drehmomentübertragend gegeneinander abgestützt und somit elastisch gegeneinander verdrehbar. Hierzu sieht die Federeinrichtung mehrere in Umfangsrichtung benachbart angeordnete Druckfedern vor, die jeweils einends am Kupplungsflansch und andernends an der Kupplungsnabe abgestützt sind. Zur Dämpfung der elastischen Verdrehbarkeit zwischen der Kupplungsnabe und dem Kupplungsflansch ist eine Reibeinrichtung vorgesehen, mittels derer die Nabenseite und die Flanschseite in Umfangsrichtung reibschlüssig drehmomentübertragend miteinander verbunden sind. Hierfür sieht die Reibeinrichtung wenigstens ein Reibelement und wenigstens eine Reibfläche auf, die unter Ausbildung der reibschlüssigen Wirkverbindung gegeneinander gepresst sind. Zudem weist die bekannte Kupplungsvorrichtung eine Lagereinrichtung mit einem Wälzlager auf. Die Nabenseite und die Flanschseite sind mittels der Lagereinrichtung radial gegeneinander abgestützt und um die Kupplungdrehachse drehgelagert. Hierzu weist die Lagereinrichtung wenigstens ein Wälzlager auf.

Eine gattunsgemäße Kupplungsvorrichtung ist aus der US 5 873 445 A bekannt und weist eine Kupplungsnabe, einen Kupplungsflansch, eine Federeinrichtung, eine Lagereinrichtung und eine Reibeinrichtung auf. Die bekannte Kupplungsvorrichtung weist zudem eine der Reib- und der Lagereinrichtung zugeordnete Spanneinrichtung auf. Die Reibeinrichtung weist mehrere Scheibenelemente auf. Eines der Scheibenelemente bildet ein Reibelement, das reibschlüssig mit einer Reibfläche zusammenwirkt und an seinem Außenumfang drehfest mit der Kupplungsnabe verbunden ist. Die Spanneinrichtung wirkt zwecks Vorspannung lediglich mittelbar auf das Reibelement.

Aus der DE 37 42 794 ist ein zweiteiliges Schwungrad bekannt, das ein Spannelement in Form einer Tellerfeder aufweist.

Aus der DE 38 05 666 A1 ist ein Torsions-Schwingungsdämpfer mit verdrehwinkelabhängiger Reibung bekannt. Der Torsions-Schwingungsdämpfer weist ein Leerlauf- und ein Lastsystem auf. Zur Feinabstimmung ist eine Wälzlager-Rampen-Einrichtung vorgesehen, die außerhalb des Leerlaufbereichs eine vorgespannte Lastreibfeder in Tätigkeit setzt.

Aus der GB 2 329 690 A ist ein Zweimassenschwungrad mit einer Reibungsdämpfereinrichtung bekannt. Die Reibungsdämpfereinrichtung steuert eine relative Verdrehung zwischen einer ersten Schwungradmasse und einer zweiten Schwungradmasse. Die Reibungsdämpfereinrichtung weist ein erstes und ein zweites Reibelement auf, die jeweils mit der ersten Schwungradmasse wirkverbunden sind. Zudem weist die Reibungsdämpfereinrichtung eine drittes Reibelement auf. Das dritte Reibelement ist mit der zweiten Schwungradmasse wirkverbunden und zwischen dem ersten und dem zweiten Reibelement angeordnet. Das erste und das zweite Reibelement sind zum Steuern der generierten Reibung mittels eines Aktuators gegen das dritte Reibelement axial anstellbar.

Aufgabe der Erfindung ist es, eine Kupplungsvorrichtung der eingangs genannten Art bereitzustellen, die eine zuverlässige Funktion der Lagereinrichtung ermöglicht und gleichzeitig einen einfachen Aufbau aufweist.

Diese Aufgabe wird durch eine Kupplungsvorrichtung mit dem Merkmalen des Anspruchs 1 gelöst. Durch die erfindungsgemäße Lösung wird das wenigstens eine Wälzlager axial vorgespannt, wodurch eine toleranzbedingt vorhandene Lagerluft des Wälzlagers reduziert wird. Hierdurch kann eine verbesserte Haltbarkeit bzw. ein verringerter Verschleiß des Wälzlagers und somit eine besonders zuverlässige Funktion der Lagereinrichtung ermöglicht werden. Zur Vorspannung des Wälzlagers ist erfindungsgemäß die Spanneinrichtung vorgesehen. Da die Spanneinrichtung erfindungsgemäß sowohl der Reibeinrichtung als auch der Lagereinrichtung zugeordnet ist, kommt dem wenigstens einen Spannelement eine besonders vorteilhafte Mehrfachfunktion zu. Denn zum einen wirkt das Spannelement auf die Reibeinrichtung und spannt hierdurch das Reibelement und die Reibfläche axial gegeneinander vor. Zum anderen wirkt das Spannelement auf das Wälzlager. Hierdurch kann auf gesonderte Spanneinrichtungen und/oder gesonderte Spannelemente für die Lagereinrichtung und die Reibeinrichtung verzichtet und somit ein besonders einfacher Aufbau der Kupplungsvorrichtung erreicht werden. Die Kupplungsvorrichtung ist vorzugsweise zur Übertragung eines Drehmoments zwischen einem Getriebe und einem Motor eines Antriebsstrangs vorgesehen. Dabei kann die Kupplungsnabe insbesondere zur drehmomentfesten Verbindung mit einer Eingangswelle eines Getriebes oder einer Ausgangswelle eines Antriebsmotors vorgesehen sein. Dementsprechend kann der Kupplungsflansch insbesondere zur drehmomentfesten Verbindung mit einem Eingangsflansch eines Getriebes oder einem Ausgangsflansch eines Motors vorgesehen sein. Die Federeinrichtung bewirkt eine in Umfangsrichtung federelastische Verbindung zwischen der Flanschseite und der Nabenseite, so dass antriebsbedingte, ruckartige Spitzen des zu übertragenden Drehmomentes nicht etwa starr - und damit ruckartig -, sondern stattdessen drehelastisch abgefedert zwischen der Flanschseite und der Nabenseite übertragen werden. Hierzu sind die Nabenseite und die Flanschseite mittels der Federeinrichtung federelastisch gegeneinander verdrehbar. Zur federelastischen verdrehbaren Abstützung zwischen der Nabenseite und der Flanschseite sieht die Federeinrichtung das wenigstens eine Federelement vor. Das wenigstens eine Federelement ist vorzugsweise eine Druckfeder. Vorzugsweise weist die Federeinrichtung mehrere gleichartige und in Umfangsrichtung zueinander beabstandet angeordnete Federelemente auf, die jeweils einends an der Kupplungsnabe und jeweils andernends an dem Kupplungsflansch abgestützt sind. Diese Abstützung kann mittelbar oder unmittelbar sein. Die Lagereinrichtung dient insbesondere zur radialen Abstützung zwischen der Flanschseite und der Nabenseite. Das Wälzlager ist vorzugsweise ein Radial- oder Schräglager. Das Wälzlager kann ein- oder mehrreihig gestaltet sein. Als Wälzkörper kann das Wälzlager insbesondere Kugeln, Rollen, Nadeln oder Tonnen aufweisen. Die Kupplungsnabe kann mittelbar oder unmittelbar auf dem Außenring des Wälzlagers abgestützt sein. Ebenso kann der Innenring mittelbar oder unmittelbar auf dem Lagerzapfen abgestützt sein. Die Reibeinrichtung dient insbesondere zur Dämpfung der elastischen Verdrehbarkeit zwischen der Flanschseite und der Nabenseite. Eine hierbei anfallende Bewegungsenergie wird mittels der Reibeinrichtung wenigstens teilweise in Reibungswärme umgesetzt. Das Reibelement kann der Kupplungsnabe und die Reibfläche kann dem Kupplungsflansch zugeordnet sein oder umgekehrt. Die reibschlüssige Wirkverbindung zwischen dem Reibelement und der Reibfläche ist vorzugsweise permanent und insoweit nicht schaltbar. Die Spanneinrichtung ist vorzugsweise permanent wirkend, so dass sowohl die Reibeinrichtung als auch das Wälzlager permanent in Axialrichtung vorgespannt sind. Das Spannelement kann insbesondere eine elastische Feder aufweisen, die beispielsweise als Schrauben- oder Tellerfeder ausgebildet sein kann. Sowohl die Reibeinrichtung als auch das Wälzlager sind mittels des Spannelements in Axialrichtung kraftbeaufschlagt. Dabei kann das Spannelement jeweils mittelbar oder unmittelbar auf die Reibeinrichtung und das Wälzlager einwirken.

In Ausgestaltung der Erfindung bewirkt das wenigstens eine Spannelement einends eine erste Axialkraft auf die Reibeinrichtung und bewirkt andernends eine der ersten Axialkraft entgegengerichtete zweite Axialkraft auf den Außenring und/oder den Innenring des wenigstens einen Wälzlagers. Die erste Axialkraft kann mittelbar oder unmittelbar auf das Reibelement oder die Reibfläche einwirken. Die zweite Axialkraft ist der ersten Axialkraft diametral entgegengerichtet und greift zur Vorspannung des Wälzlagers und damit zur Reduzierung der Lagerluft am Außenring und/oder am Innenring an. Vorzugsweise greift die zweite Axialkraft mittelbar oder unmittelbar an dem Außenring an.

Weiter gemäß der Erfindung ist das Reibelement an seinem Innenumfang drehfest mit der Kupplungsnabe verbunden und in Axialrichtung relativ zu der Kupplungsnabe verlagerbar, wobei das Spannelement in Axialrichtung einends auf eine Rückseite des Reibelements und andernends auf den Außenring des Wälzlagers wirkt. Bei dieser Ausgestaltung der Erfindung ist das Reibelement demnach der Nabenseite zugeordnet, wohingegen die Reibfläche der Flanschseite zugeordnet ist. Dabei wirkt das Spannelement rückseitig auf das Reibelement, wodurch dasselbe in Axialrichtung gegen die Reibfläche gepresst und die reibschlüssige Wirkverbindung zwischen der Nabenseite und der Flanschseite ausgebildet ist. Vorzugsweise wirkt das Spannelement unmittelbar auf die Rückseite des Reibelements. Andernends wirkt das Reibelement vorzugsweise lediglich mittelbar auf den Außenring. Hierzu kann das Spannelement beispielsweise an der Kupplungsnabe abgestützt sein, die ihrerseits an dem Außenring abgestützt ist.

In weiterer Ausgestaltung der Erfindung ist der Lagerzapfen mittels eines in Radialrichtung erstreckten Radialblechs drehfest mit dem Kupplungsflansch verbunden, wobei die Reibfläche an dem Radialblech angeordnet ist. Diese Ausgestaltung der Erfindung ermöglicht einen nochmals vereinfachten Aufbau der Kupplungsvorrichtung. Dabei weist das Radialblech eine besonders vorteilhafte Mehrfachfunktion auf. Denn zum einen dient das Radialblech der drehfesten Verbindung des Lagerzapfens mit dem Kupplungsflansch. Zum anderen weist das Radialblech die Reibfläche der Reibeinrichtung auf. Hierdurch kann eine Anzahl erforderlicher Bauteile reduziert und somit der besagte besonders einfache Aufbau erreicht werden. Das Radialblech ist an seinem Innenumfang mit dem Lagerzapfen zusammengefügt. Hierfür kann insbesondere wenigstens eine Schraubverbindung oder eine Schweißverbindung vorgesehen sein. An seinem Außenumfang kann das Radialblech mit dem Kupplungsflansch zusammengefügt sein. Alternativ kann der Kupplungsflansch unmittelbar an dem Radialblech ausgebildet sein.

In weiterer Ausgestaltung der Erfindung ist das wenigstens eine Spannelement eine Tellerfeder. Diese Ausgestaltung der Erfindung hat sich insbesondere als bauraumsparend und besonders zuverlässig erwiesen. Sofern mehr als ein Spannelement vorgesehen ist, können die Spannelemente jeweils als Tellerfeder ausgebildet und auf diese Weise ein Tellerfederpaket ausgebildet sein.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.

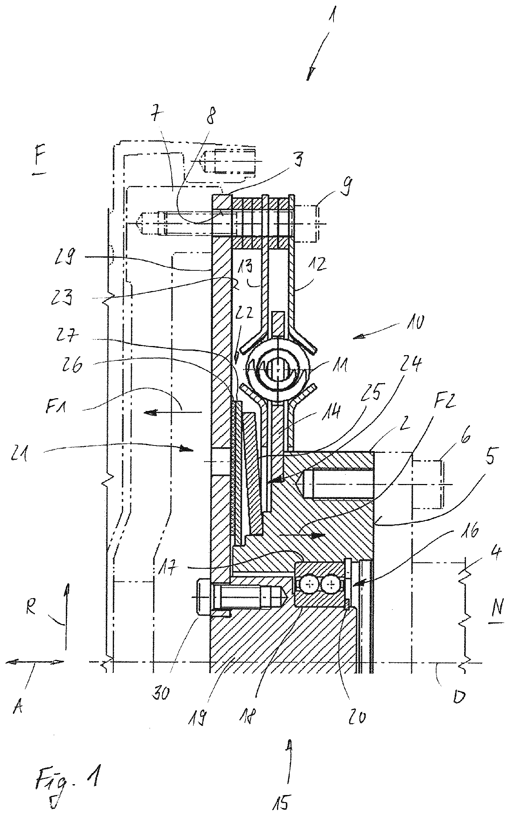

- Fig. 1: zeigt in schematischer Längsschnittdarstellung eine Ausführungsform einer erfindungsgemäßen Kupplungsvorrichtung.

Gemäß Fig. 1 ist eine Kupplungsvorrichtung 1 zur drehelastischen Drehmomentübertragung für einen Antriebsstrang vorgesehen und weist eine - in Bezug auf eine Kupplungsdrehachse D - radial innen liegende Kupplungsnabe 2 und einen radial außen liegenden Kupplungsflansch 3 auf.

Die Kupplungsnabe 2 ist einer Nabenseite N der Kupplungsvorrichtung 1 zugeordnet und vorliegend zur drehmomentfesten Verbindung mit einer lediglich schematisch angedeuteten Getriebeeingangswelle 4 des Antriebsstrangs vorgesehen. Hierzu weist die Kupplungsnabe 2 vorliegend eine der Getriebeeingangswelle 4 zugewandte Flanschfläche 5 auf, die mittels mehrerer in Umfangsrichtung benachbart angeordneter Schraubverbindungen 6 mit einer nicht näher bezeichneten Flanschfläche der Getriebeeingangswelle 4 zusammengefügt ist. Eine solche Gestaltung der Kupplungsnabe 2 ist jedoch nicht zwingend und insoweit als rein exemplarisch zu verstehen.

Der Kupplungsflansch 3 ist einer Flanschseite F der Kupplungsvorrichtung 1 zugeordnet und vorliegend zur drehmomentfesten Verbindung mit einem lediglich schematisch angedeuteten Ausgangsflansch 7 eines Antriebsmotors des Antriebsstrangs vorgesehen. Zu diesem Zweck weist der Kupplungsflansch 3 vorliegend mehrere in Umfangsrichtung benachbart angeordnete Durchgangsbohrungen 8 auf, die zur Ausbildung jeweils einer Schraubverbindung 9 zwischen dem Kupplungsflansch 3 und dem Ausgangsflansch 7 vorgesehen sind.

Die Kupplungsvorrichtung 1 weist zudem eine Federeinrichtung 10 auf, mittels derer die Nabenseite N und die Flanschseite F in Umfangsrichtung federelastisch drehmomentübertragend gegeneinander abgestützt sind. Hierfür weist die Federeinrichtung 10 vorliegend mehrere in Umfangsrichtung benachbart angeordnete Federelemente 11 auf, die auf zeichnerisch nicht näher dargestellte Weise einends mittelbar an der Kupplungsnabe 2 und andernends mittelbar an dem Kupplungsflansch 3 abgestützt sind.

Zur Aufnahme und Halterung der Federelemente 11 weist die Federeinrichtung 11 vorliegend einen Federkäfig 12, 13 auf. Der Federkäfig 12, 13 weist ein erstes Käfigblech 12 und ein zweites Käfigblech 13 auf. Der Federkäfig 12, 13 ist an seinem Außenumfang mittels der Schraubverbindung 9 drehfest mit dem Kupplungsflansch 3 zusammengefügt und insoweit der Flanschseite F zugeordnet. Zudem weist die Federeinrichtung 10 vorliegend ein Mittelblech 14 auf, das in Axialrichtung A zwischen dem ersten Käfigblech 12 und dem zweiten Käfigblech 13 angeordnet und an seinem Innenumfang drehfest mit der mit der Kupplungsnabe 2 zusammengefügt ist. Der vorliegende Aufbau und die Funktionsweise der Federeinrichtung 10 ist als solches grundsätzlich bekannt, so dass auf weitere Details hierzu nicht näher eingegangen werden braucht.

Weiterhin weist die Kupplungsvorrichtung 1 eine Lagereinrichtung 15 auf, mittels derer die Nabenseite N und die Flanschseite 5 radial gegeneinander abgestützt und um die Kupplungsdrehachse D drehgelagert sind. Hierzu weist die Lagereinrichtung 15 ein Wälzlager 16 mit einem Außenring 17 und einem Innenring 18 auf. Dabei ist die Kupplungsnabe 2 in Radialrichtung R auf dem Außenring 17 abgestützt. Der Innenring 18 ist demgegenüber in Radialrichtung R auf einem Lagerzapfen 19 abgestützt, der der Flanschseite F zugeordnet und auf noch näher beschriebene Weise drehfest mit dem Kupplungsflansch 3 verbunden ist. Der Außenring 18 ist hierzu mit einem nicht näher bezeichneten Lagersitz der Kupplungsnabe 2 zusammengepasst, der auf einer radial innen liegenden Wandungsfläche der Kupplungsnabe 2 angeordnet ist. In Axialrichtung A ist der Außenring 17 mittels eines nicht näher bezeichneten Axialsicherungsrings formschlüssig an der Kupplungsnabe 2 festgelegt. Der Innenring 18 ist mit einem nicht näher bezeichneten Lagersitz des Lagerzapfens 19 zusammengepasst und mittels eines Axialsicherungsrings 20 in Axialrichtung A an dem Lagerzapfen 19 festgelegt. Insoweit ist der Außenring 17 der Nabenseite N und der Innenring 18 ist der Flanschseite F zugeordnet.

Dabei ist das Wälzlager 16 vorliegend ein Radiallager in Form eines zweireihigen Rillenkugellagers, was jedoch nicht zwingend ist. Anstelle der hier vorgesehenen Gestaltung kann bei einer zeichnerisch nicht dargestellten Ausführungsform beispielsweise ein ein- oder mehrreihiges Schrägkugellager vorgesehen sein.

Zudem weist die Kupplungsvorrichtung 1 eine Reibeinrichtung 21 auf, mittels derer die Nabenseite N und die Flanschseite F in Umfangsrichtung reibschlüssig drehmomentübertragend miteinander wirkverbunden sind. Hierfür weist die Reibeinrichtung 21 ein Reibelement 22 und eine Reibfläche 23 auf, die unter Ausbildung der reibschlüssigen Wirkverbindung in Axialrichtung A kraftbeaufschlagt gegeneinander vorgespannt sind.

Die Federeinrichtung 10 gewährleistet, dass das zwischen der Flanschseite F und der Nabenseite N zu übertragende Drehmoment bei antriebsbedingten Laufunruhen und/oder Drehmomentspitzen nicht etwa ruckartig, sondern elastisch abgefedert übertragen wird. Dementsprechend gestattet die Federeinrichtung 6 eine elastische Verdrehung zwischen der Flanschseite F und der Nabenseite N bzw. zwischen dem Kupplungsflansch 3 und der Kupplungsnabe 2.

Die Reibeinrichtung 21 gewährleistet hierbei eine Dämpfung der besagten Laufunruhen und/oder Drehmomentspitzen. Hierzu wird bei einer elastischen Verdrehung zwischen der Flanschseite F und der Nabenseite N anfallende Bewegungsenergie durch eine in Umfangsrichtung relative Gleitbewegung zwischen dem Reibelement 22 und der Reibfläche 23 in Reibungswärme umgesetzt und auf diese Weise dissipiert.

Zudem ist eine der Lagereinrichtung 15 und der Reibeinrichtung 21 zugeordnete Spanneinrichtung 24 vorgesehen, die wenigstens ein Spannelement 25 aufweist, mittels dessen die Reibeinrichtung 21 und das wenigstens eine Wälzlager 16 jeweils axial kraftbeaufschlagt vorgespannt sind.

Dabei dient die Vorspannung der Reibeinrichtung 21 zwischen der Nabenseite N und der Flanschseite F der Ausbildung der reibschlüssigen Wirkverbindung. Die Vorspannung des Wälzlagers 16 dient einer Reduzierung einer Lagerluft des Wälzlagers 16. Hierdurch kann eine verbesserte Haltbarkeit bzw. ein verringerter Verschleiß des Wälzlagers 16 und damit eine besonders zuverlässige Funktionsweise der Lagereinrichtung 15 erreicht werden. Dadurch, dass die Spanneinrichtung 24 sowohl der Lagereinrichtung 15 als auch der Reibeinrichtung 21 zugeordnet ist, kann insbesondere eine erforderliche Anzahl an Bauteilen verringert und ein besonders einfacher Aufbau der Kupplungsvorrichtung 1 erreicht werden. Denn anstelle beispielsweise zweier gesonderter Spannelemente bzw. Spanneinrichtungen, von denen eine der Reibeinrichtung 21 und eine der Lagereinrichtung 15 zugeordnet ist, kommt der Spanneinrichtung 24 vorliegend eine besonders vorteilhafte Mehrfachfunktion zu.

Das wenigstens eine Spannelement 25 bewirkt einends eine erste Axialkraft F1 auf die Reibeinrichtung 21. Andernends bewirkt das Spannelement 25 eine der ersten Axialkraft F1 entgegengerichtete zweite Axialkraft F2, die vorliegend auf den Außenring 17 des Wälzlagers 16 wirkt.

Das wenigstens eine Spannelement ist vorliegend eine Tellerfeder 25.

Das Reibelement 22 weist vorliegend einen Reibbelag 26 und einen Reibbelagträger 27 auf. Dabei ist der Reibbelag in Form eines Reibringes 26 ausgebildet, der fest mit dem Reibbelagträger 27 zusammengefügt ist. Der Reibbelagträger 27 ist an seinem Innenumfang drehfest und in Axialrichtung A verschieblich an der Kupplungsnabe 2 festgelegt.

Das wenigstens eine Spannelement 25 wirkt auf eine nicht näher bezeichnete Rückseite des Reibelements 22, die vorliegend an dem Reibbelagträger 27 angeordnet ist. Das wenigstens eine Spannelement liegt hierfür im Bereich seines Außenumfangs stirnseitig auf der Rückseite auf und presst das Reibelement 22 somit axial gegen die Reibfläche 23. Demgegenüber ist das wenigstens eine Spannelement 25 im Bereich seines Innenumfangs in Axialrichtung A an der Kupplungsnabe 2 festgelegt. Dabei wirkt die zweite Axialkraft F2 mittelbar über die Kupplungsnabe 2 auf den Außenring 17 und bewegt diesen somit in Axialrichtung A unter Reduktion der Lagerluft relativ zu dem Innenring 18.

Der Lagerzapfen 19 ist vorliegend mittels eines in Radialrichtung R erstreckten Radialblechs 29 drehfest mit dem Kupplungsflansch 3 wirkverbunden. Dabei ist der Kupplungsflansch 3 vorliegend an einem Außenumfang des Radialblechs 29 angeordnet und unmittelbar an demselben ausgebildet. An seinem Innenumfang ist das Radialblech 29 mittels wenigstens einer Schraubverbindung 30 drehfest mit dem Lagerzapfen 19 zusammengefügt. Die Reibfläche 23 ist an dem Radialblech 29 angeordnet. Dabei ist die Reibfläche 23 vorliegend durch einen dem Reibelement 22 in Axialrichtung A zugewandten kreisringförmigen Abschnitt einer nicht näher bezeichneten Stirnfläche des Radialblechs 29 ausgebildet.

## Patentansprüche

1. Kupplungsvorrichtung (1) zur drehelastischen Drehmomentübertragung, aufweisend
- eine - in Bezug auf eine Kupplungsdrehachse (D) - radial innen liegende Kupplungsnabe (2), die einer Nabenseite (N) der Kupplungsvorrichtung (1) zugeordnet ist,
- einen radial außen liegenden Kupplungsflansch (3), der einer Flanschseite (F) der Kupplungsvorrichtung (1) zugeordnet ist,
- eine Federeinrichtung (10), mittels derer die Nabenseite (N) und die Flanschseite (F) in Umfangsrichtung federelastisch drehmomentübertragend gegeneinander abgestützt sind, wofür die Federeinrichtung (10) wenigstens ein Federelement (11) aufweist, das in Umfangsrichtung einends an der Kupplungsnabe (2) und andernends an dem Kupplungsflansch (3) abgestützt ist,
- eine Lagereinrichtung (15), mittels derer die Nabenseite (N) und die Flanschseite (F) radial gegeneinander abgestützt und um die Kupplungsdrehachse (D) drehgelagert sind, wofür die Lagereinrichtung (15) wenigstens ein Wälzlager (16) aufweist, auf dessen Außenring (17) die Kupplungsnabe (2) radial abgestützt ist, und dessen Innenring (18) auf einem der Flanschseite (F) zugeordneten Lagerzapfen (19) radial abgestützt ist,
- eine Reibeinrichtung (21), mittels derer die Nabenseite (N) und die Flanschseite (F) in Umfangsrichtung reibschlüssig drehmomentübertragend miteinander wirkverbunden sind, wofür die Reibeinrichtung (21) wenigstens ein Reibelement (22) und wenigstens eine Reibfläche (23) aufweist, die unter Ausbildung der reibschlüssigen Wirkverbindung in Axialrichtung (A) kraftbeaufschlagt gegeneinander vorgespannt sind,
- und aufweisend eine der Lagereinrichtung (15) und der Reibeinrichtung (21) zugeordnete Spanneinrichtung (24), die wenigstens ein Spannelement (25) aufweist, mittels dessen die Reibeinrichtung (21) und das wenigstens eine Wälzlager (16) jeweils axial kraftbeaufschlagt vorgespannt sind,
- **dadurch gekennzeichnet, dass** das Reibelement (22) an seinem Innenumfang drehfest mit der Kupplungsnabe (2) verbunden und in Axialrichtung (A) relativ zu der Kupplungsnabe (2) verlagerbar ist, wobei das Spannelement (25) in Axialrichtung (A) einends auf eine Rückseite des Reibelements (22) und andernends auf den Außenring (17) des Wälzlagers (16) wirkt.

2. Kupplungsvorrichtung (1) nach Anspruch 1, **dadurch gekennzeichnet, dass** der Lagerzapfen (19) mittels eines in Radialrichtung (R) erstreckten Radialblechs (29) drehfest mit dem Kupplungsflansch (3) verbunden ist, wobei die Reibfläche (23) an dem Radialblech (29) angeordnet ist.

3. Kupplungsvorrichtung (1) nach Anspruch 1 oder 2, **dadurch gekennzeichnet, dass** das wenigstens eine Spannelement (25) einends eine erste Axialkraft (F1) auf die Reibeinrichtung (21) bewirkt und andernends eine der ersten Axialkraft (F1) entgegengerichtete zweite Axialkraft (F2) auf den Außenring (17) und/oder den Innenring (18) des wenigstens einen Wälzlagers (16) bewirkt.

4. Kupplungsvorrichtung (1) nach einem der vorhergehenden Ansprüche, **dadurch gekennzeichnet, dass** das wenigstens eine Spannelement eine Tellerfeder (25) ist.

5. Kupplungsvorrichtung (1) nach einem der vorhergehenden Ansprüche, **dadurch gekennzeichnet, dass** das Spannelement (25) unmittelbar auf die Rückseite des Reibelements (22) wirkt.

## Claims

1. A clutch device (1) for torsionally elastic torque transmission, having
- a clutch hub (2) - radially on the inside relative to a clutch rotation axis (D) - which is associated with a hub side (N) of the clutch device (1),
- a clutch flange (3), radially on the outside, which is associated with a flange side (F) of the clutch device (1),
- a spring device (10), by means of which the hub side (N) and the flange side (F) are spring-elastically supported against one another in the circumferential direction in a torque-transmitting manner, for which purpose the spring device (10) has at least one spring element (11), which in the circumferential direction is supported at one end on the clutch hub (2) and at the other end on the clutch flange (3),
- a bearing device (15), by means of which the hub side (N) and the flange side (F) are radially supported against one another and mounted rotatably about the clutch rotation axis (D), for which purpose the bearing device (15) has at least one antifriction bearing (16) on whose outer race (17) the clutch hub (2) is radially supported, and whose inner race (18) is radially supported on a bearing journal (19) associated with the flange side (F),
- a friction device (21), by means of which the hub side (N) and the flange side (F) are operatively and frictionally connected to one another in the circumferential direction in a torque-transmitting manner, for which purpose the friction device (21) has at least one friction element (22) and at least one friction surface (23), which are pretensioned against one another in the axial direction (A) by a force, creating the frictional and operative connection,
- and having a tensioning device (24), associated with the bearing device (15) and with the friction device (21), that has at least one tensioning element (25) by means of which the friction device (21) and the at least one antifriction bearing (16) are each axially pretensioned by a force,
- **characterized in that** the friction element (22) is connected at its inner circumference non-rotatably to the clutch hub (2) and is movable in the axial direction (A) relative to the clutch hub (2), wherein the tensioning element (25) acts in the axial direction (A) at one end on a rear face of the friction element (22) and at the other end on the outer race (17) of the antifriction bearing (16).

2. The clutch device (1) according to claim 1, **characterized in that** the bearing journal (19) is connected non-rotatably to the clutch flange (3) by means of a radial plate (29) extending in the radial direction (R), wherein the friction surface (23) is arranged on the radial plate (29).

3. The clutch device (1) according to claim 1 or 2, **characterized in that** the at least one tensioning element (25) at one end exerts a first axial force (F1) on the friction device (21) and at the other end exerts a second axial force (F2), opposite to the first axial force (F1), on the outer race (17) and/or on the inner race (18) of the at least one antifriction bearing (16).

4. The clutch device (1) according to any of the preceding claims, **characterized in that** the at least one tensioning element is a disc spring (25).

5. The clutch device (1) according to any of the preceding claims, **characterized in that** the tensioning element (25) acts directly on the rear face of the friction element (22).

## Revendications

1. Dispositif d'accouplement (1) pour une transmission de couple élastique en rotation, présentant
- un moyeu d'accouplement (2) situé radialement à l'intérieur par rapport à un axe de rotation d'accouplement (D) et qui est associé à un côté de moyeu (N) du dispositif d'accouplement (1),
- une bride d'accouplement (3) située radialement à l'extérieur qui est associée à un côté de bride (F) du dispositif d'accouplement (1),
- un dispositif à ressort (10), au moyen duquel le côté moyeu (N) et le côté bride (F) sont appuyés l'un contre l'autre dans la direction périphérique de manière élastique en transmettant le couple, ledit dispositif à ressort (10) présentant à cet effet au moins un élément de ressort (11) dont l'une des extrémités s'appuie dans la direction périphérique sur le moyeu d'accouplement (2) et l'autre extrémité sur la bride d'accouplement (3),
- un dispositif de palier (15), au moyen duquel le côté moyeu (N) et le côté bride (F) s'appuient radialement l'un contre l'autre et sont montés en rotation autour de l'axe de rotation de l'accouplement (D), ledit dispositif de palier (15) présentant à cet effet au moins un palier à roulement (16) sur la bague extérieure (17) duquel le moyeu d'accouplement (2) s'appuie radialement et dont la bague intérieure (18) s'appuie radialement sur un tourillon (19) affecté au côté bride (F),
- un dispositif de friction (21), au moyen duquel le côté moyeu (N) et le côté bride (F) sont reliés activement l'un à l'autre dans la direction périphérique par une liaison par friction transmettant le couple, le dispositif de friction (21) présentant à cet effet au moins un élément de friction (22) et au moins une surface de friction (23) qui sont précontraints l'un contre l'autre dans la direction axiale (A) en formant la liaison active par friction,
- et présentant un dispositif de serrage (24) affecté au dispositif de palier (15) et au dispositif de friction (21) qui présente au moins un élément de serrage (25) au moyen duquel le dispositif de friction (21) et au moins un palier à roulement (16) sont respectivement précontraints par une force axiale,
- **caractérisé en ce que** l'élément de friction (22) est relié sur sa périphérie intérieure de manière solidaire au moyeu d'accouplement (2) et peut être déplacé dans la direction axiale (A) par rapport au moyeu d'accouplement (2), sachant que l'élément de serrage (25) agit dans la direction axiale (A) en une extrémité sur une face arrière de l'élément de friction (22) et en l'autre extrémité sur la bague extérieure (17) du palier à roulement (16).

2. Dispositif d'accouplement (1) selon la revendication 1, **caractérisé en ce que** le tourillon (19) est relié de manière solidaire à la bride d'accouplement (3) au moyen d'une tôle radiale (29) s'étendant dans la direction radiale (R), sachant que la surface de friction (23) est disposée sur la tôle radiale (29).

3. Dispositif d'accouplement (1) selon la revendication 1 ou 2, **caractérisé en ce qu'**au moins un élément de serrage (25) exerce en une extrémité une première force axiale (F1) sur le dispositif de friction (21) et en l'autre extrémité une deuxième force axiale (F2) opposée à la première force axiale (F1) sur la bague extérieure (17) et/ou la bague intérieure (18) d'au moins un palier à roulement (16).

4. Dispositif d'accouplement (1) selon l'une des revendications précédentes, **caractérisé en ce qu'**au moins un élément de serrage est une rondelle-ressort (25).

5. Dispositif d'accouplement (1) selon l'une des revendications précédentes, **caractérisé en ce que** l'élément de serrage (25) agit directement sur la face arrière de l'élément de friction (22).
